Europäisches Patentamt

European Patent Office

Office européen des brevets

(11) Veröffentlichungsnummer: **0 463 209 B1**

## (12) EUROPÄISCHE PATENTSCHRIFT

(45) Veröffentlichungstag der Patentschrift: **19.01.94**

(21) Anmeldenummer: **90112201.0**

(22) Anmeldetag: **27.06.90**

(51) Int. Cl.⁵: **B60C 23/00**, F16K 15/20

(54) **Schaltventil für Druckmedien.**

(43) Veröffentlichungstag der Anmeldung:
**02.01.92 Patentblatt 92/01**

(45) Bekanntmachung des Hinweises auf die
Patenterteilung:
**19.01.94 Patentblatt 94/03**

(84) Benannte Vertragsstaaten:
**DE FR GB IT NL SE**

(56) Entgegenhaltungen:
**EP-A- 0 361 183**
**FR-A- 2 134 085**

(73) Patentinhaber: **Armaturenfabrik Hermann Voss GmbH & Co.**

**D-51688 Wipperfürth(DE)**

(72) Erfinder: **Schultes, Karlheinz, Dr.**
**Martin-Luther-Platz 17**
**D-5000 Köln 1(DE)**
Erfinder: **Geiger, Karl Otto**
**Seilerstr. 40**
**D-5272 Wipperfürth(DE)**
Erfinder: **Rösch, Volker, Dr.**
**Elsenborner Weg 37**
**D-4330 Mülheim/Ruhr(DE)**

(74) Vertreter: **Patentanwälte Dr. Solf & Zapf**
**Postfach 13 01 13**
**D-42028 Wuppertal (DE)**

## Beschreibung

Die vorliegende Erfindung betrifft ein Schaltventil für Druckluft gemäß dem Oberbegriff des Anspruchs 1.

Ein derartiges Schaltventil ist aus der DE-OS 38 32 481 bekannt. Die aufeinanderliegenden Dichtflächen der scheibenförmigen Keramik-Ventilelemente des bekannten Schaltventils besitzen extrem glatte Oberflächen, so daß durch Beaufschlagung mit einer Anpresskraft aufgrund von Adhäsion eine Dichtwirkung zwischen den Ventilelementen erreicht wird, wobei diese aber dennoch aus der Schließstellung, in der die Steueröffnungen gegeneinander versetzt angeordnet sind, in die Öffnungsstellung mit fluchtend ineinander übergehenden Steueröffnungen gegeneinander verschiebbar sind. Das das verschiebbare Ventilelement halternde und führende Betätigungselement des bekannten Schaltventils ist insbesondere elektromagnetisch betätigbar und hierzu als Verlängerung eines Elektromagnet-Ankers ausgebildet, kann jedoch auch manuell betätigt werden. Dieses bekannte Ventil hat sich für viele Anwendungsfälle gut bewährt.

Nun ist es aber bei manchen Anwendungsfällen auch erwünscht, ein Schaltventil durch Beaufschlagung mit einem Druckmedium, z. B. pneumatisch, zu betätigen. Dies ist beispielsweise bei Reifen-Füllventilen von Kfz-Luftbereifungen der Fall. Hierzu sind bereits Steuersysteme bekannt, mit denen der Reifendruck über entsprechende Schaltventile geregelt bzw. eingestellt werden kann. Derartige Ventilanordnungen sind beispielsweise in der DE-PS 36 18 827 und der EP-A-0 332 472 beschrieben. Es handelt sich hierbei allerdings jeweils um Sitzventile, bei denen ein Ventilglied zum Öffnen über einen druckbeaufschlagten Hilfskolben von einem Ventilsitz abgehoben wird und nach Beendigung der Druckbeaufschlagung federkraftbedingt wieder zur dichtenden Anlage an dem Ventilsitz kommt und so schließt. Bei der genannten, speziellen Anwendung als Reifen-Füllventil treten aber bei den bekannten Sitzventilen oft Probleme auf, da die Sitzventile üblicherweise dynamisch dichtende Weichdichtungen besitzen. Bei der speziellen Anwendung ist jeweils ein Ventil im Bereich einer Radnabe eines Kraftfahrzeuges anzuordnen. Hier treten aber neben hohen Beschleunigungskräften auch sehr hohe Temperaturen auf, die insbesondere durch beim Bremsen entstehende Reibung hervorgerufen wird. Ferner kann nicht davon ausgegangen werden, daß die zum Füllen der Reifen verwendete Druckluft stets sauber und trocken ist. Es treten somit bei den bekannten Sitzventilen oft Störungen auf, die sich insbesondere nach langen Stillstandszeiten eines Fahrzeuges durch Druckverluste der Reifen bemerkbar machen. Schmutzpartikel setzen sich zwischen den Ventilkörper und den Ventilsitz, und die hohen Temperaturen können die vorhandenen Weichdichtungen nachhaltig schädigen oder sogar zerstören.

Der vorliegenden Erfindung liegt daher die Aufgabe zugrunde, das eingangs beschriebene, gattungsgemäße Schaltventil so weiterzubilden, daß es bei hoher Funktionssicherheit durch Beaufschlagung mit einem Druckmedium betätigbar ist, dabei aber dennoch besonders einfach und kompakt ausgebildet sowie preiswert herstellbar ist. Dadurch soll sich das Schaltventil für eine Verwendung als pneumatisch gesteuertes Reifen-Füllventil eignen.

Dies wird durch die kennzeichnenden Merkmale des Anspruchs 1 erreicht.

Somit beaufschlagt erfindungsgemäß das über den Druckeingang zugeführte Druckmedium die Stirnfläche des Betätigungselementes, wodurch eine Verschiebekraft $F_V$ erzeugt wird, die gleich dem Produkt aus dem Eingangsdruck $p_E$ mal der Größe der Stirnfläche A ist ($F_V = p_E \cdot A$). Auf der dem Druckeingang abgekehrten Stirnseite des Betätigungselementes ist eine vorgespannte Schließfeder angeordnet, die das Betätigungselement mit einer der Verschiebekraft $F_V$ entgegengerichteten Schließkraft $F_S$ beaufschlagt. Das erfindungsgemäße Schaltventil öffnet bei einem Eingangsdruck $p_E$, der mit der Stirnfläche A multipliziert eine Kraft $F_V$ > $F_S$ erzeugt. Das Druckmedium bildet somit ein Steuermedium zum Betätigen des Schaltventils.

Da nun aber der Druckeingang ja auch mit der Steueröffnung des verschiebbaren Ventilelementes verbunden ist, bildet das Druckmedium erfindungsgemäß gleichzeitig auch das Versorgungsmedium für einen an dem Druckausgang angeschlossenen Verbraucher, und zwar insbesondere einen Kfz.-Luftreifen. Um hierbei Luft sowohl zuführen als auch ablassen zu können, ist erfindungsgemäß die Schließfeder in Anpassung an die Stirnfläche A derart ausgelegt, daß die Schließkraft $F_S$ bei einem Eingangsdruck $p_E$ überwunden wird, der ≤ dem kleinsten gewünschten Ausgangsdruck $p_A$, d. h. ≤ dem kleinsten gewünschten Reifendruck $p_{min}$ ist. Über eine Druckmittelquelle, z. B. einem Kompressor, kann dann ein beliebiger, zwischen dem minimalen Druck $p_{min}$ und einem maximalen Druck $p_{max}$ liegender Druckwert in dem Reifen eingestellt werden. Bei nachfolgendem Druckabbau schließt das erfindungsgemäße Schaltventil federkraftbedingt schlagartig, so daß der Reifendruck auf dem eingestellten Wert erhalten bleibt.

Das erfindungsgemäße Schaltventil eignet sich aufgrund der keramischen Ventilelemente besonders gut für den Anwendungsfall als Reifen-Füllventil. Dadurch, daß die Ventilelemente stets unter einer Anpresskraft dichtend aufeinander liegen, können keinerlei Schmutzpartikel die Dichtfunktion beeinträchtigen. Auch gegen hohe Temperaturen sind die Keramik-Ventilelemente vorteilhafterweise absolut unempfindlich. Aufgrund der Betätigung des Ventils unmittelbar mit dem Versorgungsmedium ist eine äußerst einfache und kompakte Ausgestaltung gewährleistet.

In einer vorteilhaften Weiterbildung der Erfindung sind die das Betätigungselement beidseitig der Ventilelemente gegen das Ventilgehäuse abdichtenden Dichtungselemente als scheibenförmige Membrandichtungen ("Tellerformmembranen") jeweils mit einem druckdicht mit dem Betätigungselement verbundenen Mittelteil und einem druckdicht in dem Ventilgehäuse gehalterten Umfangsrand ausgebildet. Ein wesentlicher Vorteil dieser Membrandichtungen ist, daß diese bei den Bewegungen des Betätigungselementes innerhalb des Ventilgehäuses keinerlei Reibung verursachen. Dabei ist das Betätigungselement praktisch "schwimmend" in dem Ventilgehäuse "aufgehängt". Zum Verschieben des Betätigungselementes sind dadurch vorteilhafterweise sehr geringe Betätigungskräfte ausreichend.

Weitere vorteilhafte Ausgestaltungsmerkmale der Erfindung sowie erreichbare Vorteile ergeben sich aus den Unteransprüchen und der nachfolgenden Beschreibung.

Anhand der Zeichnung soll im folgenden ein Ausführungsbeispiel der Erfindung näher erläutert werden. Dabei zeigen:

Fig. 1 einen Teil-Längsschnitt eines erfindungsgemäßen Schaltventils in der Schließstellung,

Fig. 2 einen Teil-Längsschnitt des Schaltventils in der Öffnungsstellung und

Fig. 3 eine Anordnung des erfindungsgemäßen Schaltventils im Bereich einer Kfz.-Nabe in der Anwendung als Reifen-Füllventil, ebenfalls in Teil-Längsschnittdarstellung.

In den verschiedenen Figuren der Zeichnung sind gleiche bzw. gleichwirkende Teile und Komponenten stets mit den gleichen Bezugsziffern bezeichnet.

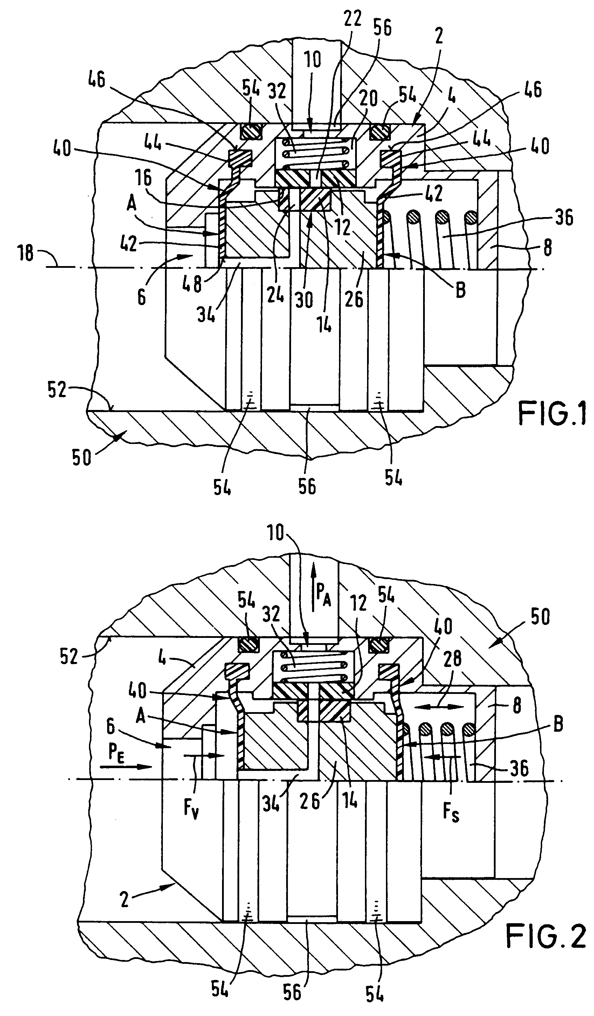

Gemäß Fig. 1 und 2 ist ein erfindungsgemäßes Schaltventil 2 als 2/2-Wegeventil ausgebildet und ein im wesentlichen hülsenförmiges Ventilgehäuse 4. Auf einer Stirnseite weist das Ventilgehäuse 4 eine einen Druckeingang 6 bildende Öffnung auf, während die gegenüberliegende Stirnseite durch einen Gehäuseboden 8 verschlossen ist. Das Ventilgehäuse 4 besitzt ferner im etwa mittigen Bereich seiner Umfangswandung eine radial nach außen führende Öffnung, die einen Druckausgang 10 bildet. Innerhalb des Ventilgehäuses 4 sind zwei scheibenförmige Ventilelemente 12 und 14 angeordnet, die mit ihren einander zugekehrten, ebenen Dichtflächen 16 unter einer Anpresskraft dichtend, jedoch gegeneinander verschiebbar aufeinander liegen. Diese Ventilelemente 12, 14 bestehen vorzugsweise aus einem Keramikmaterial, und zwar insbesondere aus Aluminiumoxydkeramik ($Al_2O_3$) oder aus SiC. Das eine Ventilelement 12 ist in Richtung der Gehäuse-Längsachse 18 ortsfest, jedoch in radialer Richtung beweglich in einer radialen Gehäuse-Ausnehmung 20 angeordnet, während das andere Ventilelement 14 relativ zu dem ortsfesten Ventilelement 12 in Richtung der Längsachse 18 längsverschiebbar geführt ist. Das ortsfeste Ventilelement 12 besitzt eine Steueröffnung 22 und das verschiebbare Ventilelement 14 eine Steueröffnung 24, wobei die Steueröffnungen 22 und 24 sich jeweils senkrecht zu den Dichtflächen 16, d. h. in zu dem Ventilgehäuse radialer Richtung, durch die Ventilelemente 12, 14 erstrecken. Die Steueröffnung 22 des ortsfesten Ventilelementes 12 ist über die Ausnehmung 20 mit dem Druckausgang 10 verbunden, während die Steueröffnung 24 des verschiebbaren Ventilelementes 14 mit dem Druckeingang 6 verbunden ist. Für die verschiebbare Führung des Ventilelementes 14 ist innerhalb des Ventilgehäuses 4 ein kolbenartiges Betätigungselement 26 in Richtung der Längsachse 18 beweglich geführt (siehe den Doppelpfeil 28 in Fig. 2). Dabei ist das verschiebbare Ventilelement 14 seitlich am Umfang des Betätigungselementes 26 gehaltert. Vorzugsweise sitzt das Ventilelement 14 formschlüssig in einer radialen Aufnahmevertiefung 30 des Betätigungselementes 26 und ist zudem druckdicht, insbesondere stoffschlüssig mit dem Betätigungselement 26 verbunden. Beispielsweise kann das Ventilelement 14 in die Aufnahmevertiefung 30 eingeklebt sein. Zur Erzeugung der Anpresskraft ist im dargestellten, bevorzugten Ausführungsbeispiel der Erfindung zwischen dem ortfesten Ventilelement 12 und dem Ventilgehäuse 4 innerhalb der Gehäuse-Ausnehmung 20 eine vorgespannte Druckfeder 32 angeordnet, die insbesondere als Spiraldruckfeder ausgebildet ist. Die Steueröffnung 24 des verschiebbaren Ventilelementes 14 ist über einen sich durch das Betätigungselement 26 erstreckenden Kanal 34 mit dem Druckeingang 6 verbunden. Dieser Kanal 34 besitzt - ausgehend von dem Eingangsanschluß 6 - zunächst einen axialen Abschnitt, der in einen radialen, in die Steueröffnung 24 mündenden Abschnitt übergeht. Auf der dem Druckeingang 6 gegenüberliegenden Seite des Betätigungselementes 26 ist zwischen diesem und dem Ventilgehäuse 4 bzw. dem Gehäuseboden 8 eine insbesondere als Spiraldruckfeder ausgebildete, vorgespannte Schließfeder 36 angeordnet.

Aufgrund der bisher beschriebenen Ausgestaltung ist das Ventilelement 12 über das Betätigungselement 26 aus einer in Fig. 1 darstellten Schließstellung, in der die Steueröffnungen 22 und 24 in Richtung der Längsachse 18 zueinander versetzt angeordnet sind, gegen eine von der Schließfeder 36 erzeugte Federkraft $F_S$ in eine in Fig. 2 dargestellte Öffnungsstellung verschiebbar, in der die beiden Steueröffnungen 22 und 24 fluchtend ineinander übergehen, so daß der Druckeingang 6 über die Steueröffnungen 22, 24 mit dem Druckausgang 10 verbunden ist.

Erfindungsgemäß ist nun das Betätigungselement 26 in Verschieberichtung (Doppelpfeil 28) gesehen beidseitig der Ventilelemente 12, 14 umfänglich über Dichtungselemente gegen das Ventilgehäuse 4 abgedichtet. Da zudem erfindungsgemäß der Druckeingang 6 im Bereich vor einer Stirnfläche A des Betätigungselementes 26 in das Ventilgehäuse 4 mündet, wird hierdurch das Betätigungselement 26 durch Beaufschlagung mit einem über den Druckeingang 6 zugeführten Druckmedium mit einem Eingangsdruck $p_E$ in die Öffnungsstellung verschoben (Fig. 2). Erfindungsgemäß bilden hierbei die Keramik-Ventilelemente 22, 24 dynamische Dichtelemente, während die Dichtelemente zwischen dem Betätigungselement 26 und dem Ventilgehäuse 4 statische Dichtelemente darstellen, über die der Druckeingang 6 von dem Druckausgang 10 getrennt ist.

In der dargestellten, bevorzugten Ausführungsform der Erfindung sind nun die Dichtungselemente als etwa scheibenförmige Membrandichtungen 40 ausgebildet. Jede Membrandichtung 40 besitzt einen druckdicht mit dem Betätigungselement 26 verbundenen Mittelteil 42 sowie einen druckdicht in dem Ventilgehäuse 4 gehalterten Umfangsrand 44. Vorzugsweise ist der Mittelteil 42 jeder Membrandichtung 40 im Bereich einer der Stirnflächen A, B des Betätigungselementes 26 mit diesem vollflächig, insbesondere stoffschlüssig verbunden. Der Mittelteil 42 kann mit dem Betätigungelement 26 insbesondere verklebt, verschweißt oder aber aufvulkanisiert sein. Der Umfangsrand 44 jeder Membrandichtung 40 ist erfindungsgemäß wulst- oder ringstegartig verdickt ausgebildet und in einer Ringnut 46 des Ventilgehäuses 4 gekammert angeordnet. Dabei können die Umfangsränder 44 in den Ringnuten 46 verklemmt, verpreßt oder unter Stoffschlußverbindung angeordnet sein. Die dem Druckeingang 6 zugekehrte Membrandichtung 40 besitzt hierbei natürlich im Bereich der dem Druckeingang 6 zugekehrten Eingangsmündung des Kanals 34 des Betätigungselementes 26 eine axiale Durchgangsöffnung 48.

Wird nun gemäß Fig. 2 über den Druckeingang 6 ein Druckmedium mit einem Eingangsdruck $p_E$ zugeführt, so entsteht durch das Produkt Eingangsdruck $p_E$ mal Stirnfläche A des Betätigungselementes 26 eine in axialer Richtung wirkende Verschiebekraft $F_V$, die der von der Schließfeder 36 erzeugten Schließkraft $F_S$ entgegenwirkt. Bei $F_V > F_S$ verschiebt sich das Betätigungselement 26 in seine Öffnungsstellung. Das Druckmedium gelangt dann über den Druckausgang 10 mit einem Ausgangsdruck $p_A$ zu einem angeschlossenen Verbraucher.

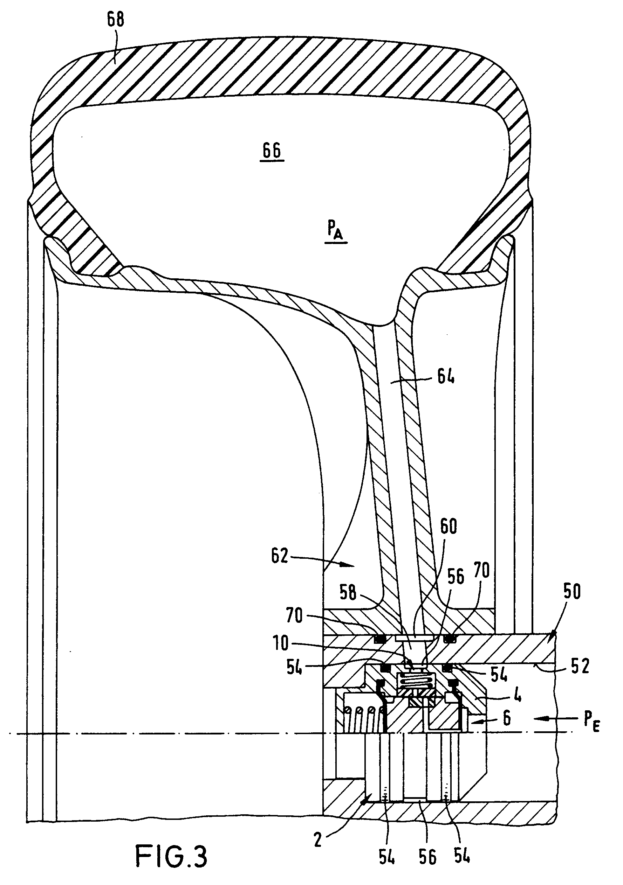

In Fig. 3 ist nun die Anwendung des erfindungsgemäßen Schaltventils als Reifen-Füllventil veranschaulicht. Hierbei bildet das Ventilgehäuse 4 einen Teil einer Fahrzeug-Radnabe 50, d. h. das Ventilgehäuse 4 sitzt umfänglich abgedichtet in einer Aufnahme 52 der Radnabe 50. Zur umfänglichen Abdichtung besitzt das Ventilgehäuse 4 in Richtung der Längsachse 18 gesehen beidseitig des Druckausgangs 10 jeweils einen in einer Ringnut sitzenden Dichtring 54. Der Druckausgang 10 mündet dabei in einer zwischen den Dichtringen 54 angeordneten Außenringnut 56 des Ventilgehäuses 4. Im Bereich dieser Außenringnut 56 besitzt die Radnabe 50 mindestens eine radiale Durchgangsöffnung 58, die in eine umfängliche Außenringnut 60 der Radnabe 50 mündet. Auf der Radnabe 50 sitzt eine drehbar gelagerte Felge 62, die im Bereich der Außenringnut 60 der Radnabe 50 mindestens einen Kanal 64 aufweist, der in eine Reifen-Innenkammer 66 eines auf der Felge 62 sitzenden Reifens 68 mündet. Beidseitig der Ringnut 60 ist jeweils ein insbesondere in einer Ringnut der Nabe 50 sitzender Dichtring 70 angeordnet. Durch diese erfindungsgemäße Ausgestaltung ist eine nach außen druckdichte Verbindung zwischen feststehenden und drehbaren Teilen gewährleistet.

Die Erfindung ist nicht auf das dargestellte und beschriebene Ausführungsbeispiel beschränkt, sondern umfaßt auch alle im Sinne der durch die Patentansprüche bestimmten Erfindung gleich wirkenden Ausführungen. So könnte beispielsweise die die Anpresskraft zwischen den Dichtelementen 12, 14 erzeugende Druckfeder 32 auch zwischen dem verschiebbaren Ventilelement 14 und dem Betätigungselement 26 angeordnet sein. In diesem Fall wäre dann das ortsfeste Ventilelement 12 umfänglich druckdicht in dem Ventilgehäuse 4 anzuordnen. Die dargestellte und beschriebene, bevorzugte Ausführung ist jedoch insofern von besonderem Vorteil, als die Erzeugung der Anpresskraft noch durch den ausgangsseitigen, in der Reifen-Innenkammer 66 herrschenden Fülldruck, unterstützt wird. Dies bedeutet, daß die Dichtwirkung um so höher ist, je höher der Fülldruck ist.

**Patentansprüche**

1. Schaltventil (2) für Druckluft, bestehend aus einem Ventilgehäuse (4) mit einem Druckeingang (6) und einem Druckausgang (10) sowie aus zwei in dem Ventilgehäuse (4) angeordneten, mit ebenen Dichtflächen (16) unter einer Anpreßkraft dichtend und gegeneinander verschiebbar aufeinander liegenden, insbesondere aus Keramikmaterial bestehenden und jeweils eine mit dem Druckeingang (6) bzw. mit dem Druckausgang (10) verbundene Steueröffnung (22, 24) aufweisenden Ventilelementen (12, 14), wobei das eine Ventilelement (14) seitlich am Umfang eines kolbenartig axial beweglich in dem Ventilgehäuse (4) geführten Betätigungselementes (26) gehaltert und hierdurch relativ zu dem anderen, in Verschieberichtung (28) ortsfest gelagerten Ventilelement (12) aus einer Schließstellung gegen Federkraft (F$_s$) in eine Öffnungsstellung verschiebbar ist, in der das Druckmedium als Versorgungsmedium zu einem an dem Druckausgang (10) anschließbaren Verbraucher strömen kann, wozu die Steueröffnung (24) des verschiebbaren Ventilelementes (14) über einen sich bis zu einer Stirnfläche (A) des Betätigungselementes (26) durch dieses erstreckenden Kanal (34) mit dem im Bereich dieser Stirnfläche (A) in das Ventilgehäuse (4) mündenden Druckeingang (6) verbunden ist,
**dadurch gekennzeichnet,** daß das Betätigungselement (26) in Verschieberichtung (28) gesehen beidseitig der Ventilelemente (12, 14) umfänglich derart über Dichtungselemente gegen das Ventilgehäuse (4) abgedichtet ist, daß das Betätigungselement (26) durch Beaufschlagung mit dem über den Druckeingang (6) zugeführten Druck- bzw. Versorgungsmedium in die Öffnungsstellung verschoben wird, wobei das Ventilgehäuse (4) Teil einer Fahrzeug-Radnabe (50) ist und der Druckausgang (10) mit einer den Verbraucher bildenden Reifen-Innenkammer (66) eines an der Radnabe (50) befestigten Fahrzeugrades mit Luftbereifung verbunden sowie der Druckeingang (6) mit einer Druckmittelquelle verbindbar ist, und wobei die in Schließrichtung wirkende Federkraft (F$_s$) derart ausgelegt ist, daß die Öffnungsstellung bei einem Eingangsdruck (p$_E$) erreicht wird, der ≤ dem kleinsten gewünschten Reifendruck (p$_{min}$) ist.

2. Schaltventil nach Anspruch 1,
**dadurch gekennzeichnet,** daß die Dichtungselemente als etwa scheibenförmige Membrandichtungen (40) jeweils mit einem druckdicht mit dem Betätigungselement (26) verbundenen Mittelteil (42) und einem druckdicht in dem Ventilgehäuse (4) gehalterten Umfangsrand (44) ausgebildet sind.

3. Schaltventil nach Anspruch 2,
**dadurch gekennzeichnet,** daß der Mittelteil (42) jeder Membrandichtung (40) im Bereich einer der Stirnflächen (A, B) des Betätigungselementes (26) mit diesem insbesondere stoffschlüssig verbunden ist.

4. Schaltventil nach Anspruch 2 oder 3,
**dadurch gekennzeichnet,** daß der Umfangsrand (44) jeder Membrandichtung (40) wulstartig verdickt ausgebildet und in einer Ringnut (46) des Ventilgehäuses (4) gekammert angeordnet ist.

5. Schaltventil nach einem oder mehreren der Ansprüche 2 bis 4,
**dadurch gekennzeichnet,** daß der Mittelteil (42) der dem Druckeingang (6) zugekehrten Membrandichtung (40) im Bereich des Kanals (34) des Betätigungselementes (26) eine Durchgangsöffnung (48) aufweist.

6. Schaltventil nach einem oder mehreren der Ansprüche 1 bis 5,
**dadurch gekennzeichnet,** daß zur Erzeugung der in Schließrichtung wirkenden Federkraft (F$_s$) auf der dem Druckeingang (6) abgekehrten Seite des Betätigungselementes (26) eine zwischen diesem und dem Ventilgehäuse (4) unter Vorspannung angeordnete, vorzugsweise als Spiraldruckfeder ausgebildete Schließfeder (36) angeordnet ist.

7. Schaltventil nach einem oder mehreren der Ansprüche 1 bis 6,
**dadurch gekennzeichnet,** daß das verschiebbare Ventilelement (14) formschlüssig und insbesondere druckdicht in einer Aufnahmevertiefung (30) des Betätigungselementes (26) sitzt.

8. Schaltventil nach einem oder mehreren der Ansprüche 1 bis 7,
**dadurch gekennzeichnet,** daß das ortsfeste Ventilelement (12) in einer zur Verschieberichtung (28) senkrechten Richtung beweglich in einer Ausnehmung (20) des Ventilgehäuses (4) geführt ist, wobei zur Erzeugung der Anpreßkraft zwischen dem ortsfesten Ventilelement (12) und dem Ventilgehäuse (4) eine insbesondere als Spiralfeder ausgebildete Druckfeder (32) unter Vorspannung angeordnet ist.

**Claims**

1. Switching valve (2) for compressed air, comprising a valve housing (4) having a pressure inlet (6) and a pressure outlet (10), and further comprising two valve elements (12, 14) which are arranged in the valve housing (4), lie on one another by means of planar sealing surfaces (16) at a contact pressure force in sealing and mutually displaceable manner, are in particular of ceramic material and each have a control opening (22, 24 respectively) connected to the pressure inlet (6) and to the pressure outlet (10) respectively, the one valve element (14) being mounted laterally on the periphery of an actuation element (26) which is guided axially movably in the valve housing (4) in the manner of a piston, the valve element (14) thereby being displaceable relative to the other valve element (12), which is mounted to be stationary in the direction of displacement (28), from a closed position in opposition to spring force ($F_s$) into an open position in which the compressed medium can flow as a supply medium to a consumer which is connectable to the pressure outlet (10), for which purpose the control opening (24) of the displaceable valve element (14) is connected, by way of a channel (34) which extends as far as an end face (A) of the actuation element (26) through the latter, to the pressure inlet (6) which opens into the valve housing (4) in the region of this end face (A),
characterized in that the actuation element (26) is sealed by way of sealing elements with respect to the valve housing (4) peripherally, as seen in the direction of displacement (28), on both sides of the valve elements (12, 14), such that the actuation element (26) is displaced into the open position by being acted upon by the compressed or supply medium supplied by way of the pressure inlet (6), the valve housing (4) being part of a vehicle wheel hub (50), and the pressure outlet (10) being connected to a tyre inner chamber (66), forming the consumer, of a vehicle wheel secured to the wheel hub (50) and pressurized with air, and it being possible for the pressure inlet (6) to be connected to a compressed medium source, and the spring force ($F_s$) acting in the direction of closing being designed such that the open position is achieved at an inlet pressure ($p_E$) which is $\leq$ the minimum desired tyre pressure ($p_{min}$).

2. Switching valve according to Claim 1, characterized in that the sealing elements are constructed as approximately disc-shaped diaphragm seals (40) each having a central part (42) which is connected in pressure-tight manner to the actuation element (26) and a peripheral edge (44) which is mounted in pressure-tight manner in the valve housing (4).

3. Switching valve according to Claim 2, characterized in that the central part (42) of each diaphragm seal (40) is connected in the region of one of the end faces (A, B) of the actuation element (26) to this actuation element, in particular with material closure.

4. Switching valve according to Claim 2 or 3, characterized in that the peripheral edge (44) of each diaphragm seal (40) is constructed to be thickened in the manner of a bead and is arranged enclosed in an annular groove (46) of the valve housing (4).

5. Switching valve according to one or more of Claims 2 to 4, characterized in that the central part (42) of the diaphragm seal (40) facing the pressure inlet (6) has a through opening (48) in the region of the channel (34) of the actuation element (26).

6. Switching valve according to one or more of Claims 1 to 5, characterized in that, to produce the spring force ($F_s$) acting in the direction of closing on the side of the actuation element (26) remote from the pressure inlet (6), there is provided a closing spring (36) which is arranged between this actuation element (26) and the valve housing (4) under pre-tension and which is preferably constructed as a helical pressure spring.

7. Switching valve according to one or more of Claims 1 to 6, characterized in that the displaceable valve element (14) is seated with form closure and in particular in pressure-tight manner in a receiving depression (30) of the actuation element (26).

8. Switching valve according to one or more of Claims 1 to 7, characterized in that the stationary valve element (12) is guided, movable in a direction perpendicular to the direction of displacement (28), in a recess (20) of the valve housing (4), there being arranged under pretension, to produce the contact pressure force between the stationary valve element (12) and the valve housing (4), a pressure spring (32) which is constructed in particular as a helical spring.

## Revendications

1. Soupape de commutation (2) pour air comprimé, comportant un boîtier de soupape (4) avec une entrée de pression (6) et une sortie de pression (10), ainsi que deux éléments de soupape (12, 14) disposés dans le boîtier (4) et dont des surfaces d'étanchéité planes (16) sont appliquées l'une sur l'autre sous pression de manière étanche et peuvent être déplacées l'une par rapport à l'autre, ces éléments étant réalisés en particulier en une matière céramique et présentant une ouverture de commande (22, 24) reliée respectivement à l'entrée (6) et à la sortie (10) de pression, l'un des éléments de soupape (14) étant fixé latéralement sur la périphérie d'un élément d'actionnement (26), mobile, à la manière d'un piston, axialement dans le boîtier de soupape (4) et pouvant être de ce fait déplacé, par rapport à l'autre élément de soupape (12), stationnaire par rapport à la direction de déplacement (28), contre la force d'un ressort ($F_s$) d'une position de fermeture vers une position d'ouverture dans laquelle l'agent de pression peut circuler, en tant qu'agent d'alimentation, vers un utilisateur qui peut être relié à la sortie de pression (10), l'ouverture de commande (24) de l'élément de soupape mobile (14) étant relié par un canal (34) s'étendant à travers l'élément d'actionnement (26) jusqu'à la face avant (A) de ce dernier, à l'entrée de pression (6) débouchant dans le boîtier de soupape (4) dans la région de cette face frontale (A), caractérisé par le fait que, vu dans la direction de déplacement (28), la circonférence de l'élément d'actionnement (26) est étanchée des deux côtés des éléments de soupape (12, 14) au moyen d'éléments d'étanchéité par rapport au boîtier de soupape (4), de manière à ce que l'élément d'actionnement (26) soit déplacé vers la position d'ouverture sous l'action de l'agent de pression ou d'alimentation introduit par l'entrée de pression (6), le boîtier de soupape (4) étant une partie d'un moyeu de roue de véhicule (50) et la sortie de pression (10) étant reliée à une chambre intérieure (66) d'un pneu, constituant l'utilisateur, d'une roue de véhicule à pneu fixé au moyeu (50), que l'entrée de pression (6) peut être reliée à une source d'agent de pression et que la force de ressort ($F_s$) agissant dans la direction de fermeture est prévue de manière à ce que la position d'ouverture soit atteinte pour une pression d'entrée ($P_E$) qui est ≤ à la plus faible pression désirée ($P_{min}$) du pneu.

2.  Soupape de commutation selon la revendication 1,
    caractérisée par le fait que les éléments d'étanchéité sont des joints à membrane (40) ayant sensiblement la forme de disques, présentant respectivement une partie centrale (42) reliée de manière étanche à la pression à l'élément d'actionnement (26) et un bord périphérique (44) maintenu de manière étanche à la pression dans le boîtier de soupape (4).

3.  Soupape de commutation selon la revendication 2,
    caractérisée par le fait que la partie centrale (42) de chaque joint à membrane (40) est reliée à l'élément d'actionnement (26) dans la région de l'une des faces frontales (A, B) de celui-ci, en particulier par engagement de matières.

4.  Soupape de commutation selon la revendication 2 ou 3,
    caractérisée par le fait que le bord périphérique (44) de chaque joint à membrane (40) a la forme d'un bourrelet et est logé dans une rainure annulaire (46) du boîtier de soupape (4).

5.  Soupape de commutation selon l'une ou plusieurs des revendications 2 à 4,
    caractérisée par le fait que la partie centrale (42) du joint à membrane (40) en regard de l'entrée de pression (6) comporte dans la région du canal (34) de l'élément d'actionnement (26) une ouverture de passage (48).

6.  Soupape de commutation selon l'une ou plusieurs des revendications 1 à 5,
    caractérisée par le fait que, pour engendrer la force de ressort ($F_s$) agissant dans la direction de fermeture, un ressort de fermeture (36) ayant de préférence la forme d'un ressort hélicoïdal est disposé sous précontrainte sur le côté de l'élément d'actionnement (26) opposé à l'entrée de pression (6), entre celui-ci et le boîtier de soupape (4).

7.  Soupape de commande selon l'une ou plusieurs des revendications 1 à 6,
    caractérisée par le fait que l'élément de soupape mobile (14) est disposé sans jeu et en particulier de manière étanche à la pression dans un évidement de réception (30) de l'élément d'actionnement (26).

8.  Soupape de commutation selon l'une ou plusieurs des revendications 1 à 7,
    caractérisée par le fait que l'élément de soupape stationnaire (12) est mobile dans une direction perpendiculaire par rapport à la direction de déplacement (28) dans un évidement (20) du boîtier de soupape (4), un ressort de pression (32), ayant en particulier la forme d'un ressort hélicoïdal, étant disposé sous précontrainte entre l'élément de soupape stationnaire (12) et le boîtier de soupape (4) pour engendrer la force de pression.

FIG.1

FIG.2

FIG.3